Europäisches Patentamt

**European Patent Office**

Office européen des brevets

(11) Veröffentlichungsnummer: **0 069 301**
**A1**

(12) # EUROPÄISCHE PATENTANMELDUNG

(21) Anmeldenummer: 82105623.1

(22) Anmeldetag: 25.06.82

(51) Int. Cl.³: **C 08 F 8/12**
**C 08 F 8/42**

(30) Priorität: 03.07.81 DE 3126201

(43) Veröffentlichungstag der Anmeldung:
12.01.83 Patentblatt 83/2

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt/Main 80(DE)

(72) Erfinder: Zimmermann, Wolfgang, Dr.
Im Stückes 48
D-6233 Kelkheim (Taunus)(DE)

(72) Erfinder: Pospich, Günther
Albert-Blank-Strasse 6
D-6230 Frankfurt am Main 80(DE)

(54) Verfahren zur Herstellung einer Polyvinylalkohol-Komplexverbindung und danach hergestellte Polyvinylalkohol-Komplexverbindung.

(57) Polyvinylalkohol-Komplexverbindungen werden durch Reaktion von Polyvinylalkohol mit Komplexbildnern hergestellt. Die Komplexbildung erfolgt vorteilhaft in einem alkoholischen Medium. Sie gelingt besonders gut, wenn zunächst eine alkoholische Lösung eines Polyvinylesters mit einem Komplexbildner in alkoholischer Lösung vermischt wird und der Polyvinylester dann in Gegenwart eines Katalysators in homogener Phase der Alkoholyse unterworfen wird. Die Polyvinylalkohol-Komplexverbindungen eignen sich als Bindemittel und Verdickungsmittel für Streichmassen, insbesondere in der Papierindustrie.

EP 0 069 301 A1

Verfahren zur Herstellung einer Polyvinylalkohol-Komplexverbindung und danach hergestellte Polyvinylalkohol-Komplexverbindung

Die Erfindung bezieht sich auf ein Verfahren zur Herstellung
einer Komplexverbindung aus Polyvinylalkohol und einer mit
Polyvinylalkohol Komplexe bildenden Verbindung und die
danach hergestellte Polyvinylalkohol-Komplexverbindung.

Es ist bekannt, daß Polyvinylalkohol (PVAL) mit mehrbasigen
anorganischen Säuren, z.B. Borsäure, Komplexe bildet (vgl.
J.G. Pritchard, Polyvinyl Alcohol, Gordon and Breach Science
Publishers, London, 1970, Seiten 73 und 74). Infolge der
Komplexbildung entsteht aus der wäßrigen PVAL-Lösung ein
Gel, das sich zur Herstellung von Klebstoffen eignet.
Anstelle von Borsäure sind auch andere wasserlösliche
anorganische Borverbindungen verwendbar, z.B. Borax, Natriummetaborat und Natriumpentaborat (vgl. US-Patentschrift
3 135 648). Das Gel erhält man in bekannter Weise dadurch,
daß entweder eine heiße wäßrige Lösung der Borverbindung mit
einer heißen wäßrigen PVAL-Lösung gemischt wird oder die
Borverbindung mit einem PVAL in kaltem Wasser vermischt und
das Gemisch dann erhitzt wird oder die Borverbindung mit
einem PVAL in trockenem Zustand vermischt und das Gemisch
dann am Ort der Anwendung in Wasser erhitzt wird.

Ferner ist bekannt, daß man durch Verseifen oder Umestern
von Ethylen/Vinylester-Copolymeren und Behandeln der erhaltenen Ethylen/Vinylalkohol-Copolymere mit Metallverbindungen, nämlich Verbindungen der Elemente der III. Hauptgruppe
und/oder der IV. Nebengruppe des Periodensystems, transparente Copolymere erhält (vgl. deutsche Öffenlegungsschrift
15 70 282). Diese Behandlung wird während oder nach der
Verseifung oder Umesterung durchgeführt, wobei die Copolymeren in gelöster oder dispergierter Form vorliegen und die
Metallverbindungen in einer Menge von bis zu 10 Gew.-% oder
auch mehr (bezogen auf die Polymeren) eingesetzt werden.

Die bekannten Verfahren zur Herstellung von PVAL-Komplexen
haben verschiedene Nachteile. Einerseits sind die genannten
anorganischen Borverbindungen nur begrenzt in kaltem Wasser
löslich, sodaß relativ große Volumina der Lösungen benötigt
werden, und andererseits ist die Herstellung homogener
Gemische schwierig, da bei Zugabe einer gelösten Borverbindung zu einer PVAL-Lösung infolge einer örtlichen Überkonzentration an der Zugabestelle bereits der unlösliche
PVAL-Komplex ausfällt. Ferner sind PVAL und die komplexbildende Verbindung in trockenem Zustand normalerweise
verschieden in Korngröße und Dichte, und das trockene
Gemisch neigt daher bei Lagerung und Transport zur Entmischung.

Aufgabe der Erfindung ist es nun, unter Vermeidung der
dargelegten Nachteile in einfacher Weise einen PVAL herzustellen, der unabhängig von der Korngröße homogen mit einem
Komplexbildner reagiert hat.

Die Erfindung betrifft ein Verfahren zur Herstellung einer
Komplexverbindung aus Polyvinylalkohol und einer mit Polyvinylalkohol Komplexe bildenden Verbindung durch Alkoholyse
eines Polyvinylesters in Gegenwart der Komplexe bildenden
Verbindung und eines basischen Katalysators und ist dadurch
gekennzeichnet, daß bei einer Temperatur von 10 bis 50°C
zunächst eine alkoholische Lösung eines Polyvinylesters mit
einem Polymerisationsgrad von 400 bis 10 000 mit einer
alkoholischen Lösung der Komplexe bildenden Verbindung zu
einem klaren Lösungsgemisch vereinigt und in diesem Lösungsgemisch dann eine Lösung des Katalysators in einem alkoholischen Medium homogen verteilt wird.

Als Ausgangsmaterial wird ein Polyvinylester verwendet,
dessen Säurekomponente vorzugsweise 1, 2 oder 3 Kohlenstoffatome aufweist. Der Polymerisationsgrad des Polyvinylesters
beträgt 300 bis 10 000 und insbesondere 350 bis 6 000 (bestimmt aus dem Gewichtsmittel des Molekulargewichts, ermittelt nach der Lichtstreuungsmethode mit Quecksilberdampflicht). Besonders geeignet ist Polyvinylacetat. Der Polyvinylester wird üblicherweise durch Massepolymerisation oder vorzugsweise durch Lösungspolymerisation hergestellt, wobei als Lösungsmittel ein niederer aliphatischer Alkohol mit 1, 2 oder 3 Kohlenstoffatomen, vorzugsweise Methanol, verwendet wird.

In der ersten Stufe des erfindungsgemäßen Verfahrens wird eine alkoholische Lösung des Polyvinylesters mit einer alkoholischen Lösung der Komplexe bildenden Verbindung zu einem klaren Lösungsgemisch vereinigt. Dabei beträgt die Konzentration des Polyvinylesters in der alkoholischen Lösung normalerweise 10 bis 70 Gew.-%, vorzugsweise 15 bis 60 Gew.-%. Die Konzentration des Komplexbildners in der alkoholischen Lösung ist abhängig von der Löslichkeit des jeweiligen Komplexbildners; es ist zweckmäßig, jeweils möglichst konzentrierte Lösungen zu verwenden.

In der zweiten Verfahrensstufe wird in dem vorgenannten klaren Lösungsgemisch eine Lösung des zur Alkoholyse des Polyvinylesters benötigten basischen Katalysators in einem alkoholischen Medium homogen verteilt. Als alkoholisches Medium dient ein niederer aliphatischer Alkohol, der bis zu 60 Gew.-%, vorzugsweise 1 bis 20 Gew.-% Wasser enthalten kann.

Die Alkoholyse, vorzugsweise Methanolyse, des Polyvinylesters, erfolgt in Gegenwart eines basischen Katalysators. Als Katalysator wird vor allem ein Alkalialkoholat oder ein Alkalihydroxid eingesetzt, z.B. Natriummethylat, Kaliummethylat, Natriumethylat, Kaliumethylat sowie Natriumhydroxid und Kaliumhydroxid. Der Katalysator wird in einer Menge von 0,5 bis 20 Gew.-%, vorzugsweise von 1 bis 15 Gew.-% (bezogen auf Polyvinylester), eingesetzt.

Als Lösemittel für den Polyvinylester, den Komplexbildner und den Katalysator dient jeweils ein niederer aliphatischer Alkohol mit vorzugsweise 1, 2 oder 3 Kohlenstoffatomen, wobei Methanol besonders geeignet ist. Es ist empfehlenswert, als Lösemittel für den Polyvinylester, den Komplexbildner und den Katalysator jeweils denselben niederen Alkohol einzusetzen.

Für die Bildung von Komplexen mit Polyvinylalkohol werden erfindungsgemäß insbesondere Verbindungen eines Elements der I., IV., V. oder VI. Nebengruppe oder der III. Hauptgruppe des Periodensystems der Elemente eingesetzt, vorzugsweise anorganische Verbindungen des Kupfers, Titans, Vanadins und Chroms sowie vor allem des Bors, die unter Normalbedingungen in einem niederen aliphatischen Alkohol löslich sein müssen. Geeignete Komplexbildner sind beispielsweise Kupfer(II)-bromid, Kupfer(II)-chlorid, Kupfer(II)-nitrat, Kupfer(II)-thiocyanat, Kupfer(II)-sulfat, Titan(III)-chlorid, Titan-(IV)-chlorid, Titan(IV)-fluorid, Triethanolamin-titanat, Vanadin(III)-chlorid, Vanadin(IV)-chlorid, Vanadin(V)-oxid-chlorid, Natriumchromat, Natriumdichromat, Ammoniumdichromat sowie Borsäure und Borax. Ferner sind anwendbar elementares Jod sowie organische Verbindungen wie Kongorot (4,4'-Bis-/4-amino-1-sulfo-3-naphthylazo7-biphenyl Dinatriumsalz) sowie Diazoverbindungen, die als Lichtsensibilisatoren für PVAL dienen, und auch Gallussäure, Salicylanilid, Phloroglucin, Brenzkatechin und 2,4-Dihydroxybenzoesäure.

Die Anwesenheit eines Komplexbildners in gelöster Form vor der Bildung des PVAL aus dem Polyvinylester hat den überraschenden Vorteil, daß die Komplexierung des PVAL sehr homogen, d.h. gleichmäßig über die entstehenden PVAL-Molekülketten verteilt, stattfindet.

Alle Verfahrensstufen werden im allgemeinen bei einer Temperatur von 10 bis $50^{\circ}C$, vorzugsweise 20 bis $40^{\circ}C$, durchgeführt. Der pH-Wert des Reaktionsgemisches liegt üblicherweise im Bereich von 8 bis 14, vorzugsweise von 9 bis 12.

Eine bevorzugte Ausführungsform des erfindungsgemäßen Verfahrens besteht darin, daß zunächst eine Polyvinylester-Lösung mit einer Komplexbildner-Lösung homogen vermischt wird, das erhaltene Gemisch dann unter Rühren gleichmäßig mit einer Katalysator-Lösung vermischt wird und das erhaltene Reaktionsgemisch stehen gelassen wird, gegebenenfalls unter Rühren oder Kneten. Das entstandene Gel wird gegebenenfalls zerkleinert, vorzugsweise durch Zerschneiden mit Hilfe von Messern oder in einer Schneidmühle, mit dem jeweils verwendeten Alkohol gewaschen und schließlich unter schonenden Bedingungen getrocknet, vorzugsweise bei einer Temperatur von 60 bis 120°C und gegebenenfalls unter Inertgas, vorzugsweise Stickstoff.

Die erfindungsgemäße Herstellung einer PVAL-Komplexverbindung kann in an sich bekannter Weise auch kontinuierlich durchgeführt werden. Dies erfolgt vorzugsweise durch kontinuierliches Aufbringen des homogenen Gemisches aus Polyvinylesterlösung und Komplexbildnerlösung, der in einem Mischer, vorzugsweise einem Durchlaufmischer, die Katalysatorlösung beigefügt wird, auf ein endlos umlaufendes Förderband, anschließende Abnahme des entstandenen Gels und dessen Zerkleinerung, Reinigung durch Waschen und Trocknen. Das Förderband ist an seiner Oberseite trogförmig geführt und gegebenenfalls auf der Oberfläche, die mit dem Reaktionsgemisch in Berührung kommt, mit einem Polyolefin, vorzugsweise Polyethylen, beschichtet (vgl. deutsche Patentschrift 17 20 709 = britische Patentschrift 11 68 757).

Die erfindungsgemäß hergestellten PVAL-Komplexverbindungen werden als Bindemittel und Verdickungsmittel für Streichmassen, insbesondere in der Papierindustrie, und für Klebstoffe verwendet. Filme, die aus wäßrigen Lösungen dieser PVAL-Komplexverbindungen hergestellt werden, sind besonders zäh und abriebfest. Besonders geeignet sind wäßrige Lösungen der erfindungsgemäß hergestellten PVAL-Komplexverbindungen als Beschichtungsmittel, insbesondere in der Textilindustrie, z.B. als Schlichtemittel.

Die folgenden Beispiele erläutern die Erfindung. Prozentangaben beziehen sich jeweils auf das Gewicht.

BEISPIEL 1

In einem mit Rührer versehenen Reaktionsgefäß werden 100 g
einer 30prozentigen methanolischen Lösung eines Polyvinylacetats, der einen Polymerisationsgrad von 1.800 aufweist,
bei einer Temperatur von 20°C unter Rühren mit 1,25 g
einer 70prozentigen methanolischen Lösung von Triethanolamintitanat vermischt. Das resultierende klare Lösungsgemisch wird dann unter Rühren mit 1,5 g einer 15prozentigen
Natronlauge versetzt, die durch Verdünnen von 40prozentiger
wäßriger Natronlauge mit Methanol hergestellt worden ist.
Das klare, homogene Reaktionsgemisch, dessen pH-Wert 10,0
beträgt, wird bei einer Temperatur von 25°C stehengelassen.
Nach 10 Minuten beginnt das Gemisch zu gelieren, und nach
weiteren 15 Minuten ist die Methanolyse des Polyvinylesters
beendet. Das entstandene Gel wird mit Messern in Würfel mit
einer Kantenlänge von 3 mm geschnitten, und die Würfel
werden auf einem Sieb mit Methanol alkalifrei gewaschen und
im Trockenschrank bei einer Temperatur von 100°C getrocknet.
In der Mutterlauge des Gels und im Waschmethanol ist Titan
nicht nachweisbar. Nach dem Trocknen erhält man ein gut
rieselfähiges Granulat, das in kaltem Wasser auf das 5-fache
Volumen quillt.

BEISPIEL 2

Beispiel 1 wird wiederholt, wobei statt der Lösung von Triethanolamintitanat nun 5 g einer 10prozentigen methanolischen Borsäurelösung und statt 1,5 g mm 3 g der 15prozentigen
Natronlauge verwendet werden. Der pH-Wert des Reaktionsgemisches beträgt 9,5. In der Mutterlauge des Gels und im Waschmethanol ist Bor nicht nachweisbar.

## BEISPIEL 3

Beispiel 1 wird wiederholt, wobei statt der Lösung von Triethanolamintitanat nun 10 g einer 5prozentigen methanolischen Boraxlösung und statt 1,5 g mm 3 g der 15prozentigen Natronlauge verwendet werden. Der pH-Wert des Reaktionsgemisches beträgt 9,8. Die Gelierung des Reaktionsgemisches beginnt nach 10 Minuten, und nach weiteren 30 Minuten ist die Methanolyse des Polyvinylesters beendet. Die Trocknung der Würfel wird unter Stickstoffatmosphäre durchgeführt. In der Mutterlauge des Gels und im Waschmethanol ist Bor nicht nachweisbar.

## BEISPIEL 4

Beispiel 1 wird wiederholt, wobei statt der Lösung von Triethanolamintitanat nun 5 g einer 2prozentigen methanolischen Lösung von Kongorot und statt 1,5 g mm 3 g der 15prozentigen Natronlauge verwendet werden. Der pH-Wert des Reaktionsgemisches beträgt 10,5. Die Gelierung des rotgefärbten Reaktionsgemisches beginnt nach 15 Minuten, und die Methanolyse des Polyvinylesters ist nach weiteren 35 Minuten beendet. In der Mutterlauge des Gels und im Waschmethanol ist Kongorot nicht nachweisbar. Die Trocknung wird unter Stickstoffatmosphäre durchgeführt.

Aus dem erhaltenen Polyvinylalkohol-Komplex wird eine 10prozentige wäßrige Lösung hergestellt, und aus dieser wird ein 60 um dicker Film gegossen. Der getrocknete Film ist in kaltem Wasser unlöslich. Er dient als pH-Indikator, der einen pH von weniger als 3 durch Blaufärbung und einen pH von mehr als 3 durch Rotfärbung anzeigt.

## BEISPIEL 5

Beispiel 1 wird wiederholt, wobei statt der Lösung von Triethanolamintitanat nun 10 g einer 5prozentigen methanolischen Jodlösung und statt 1,5 g mm 5 g der 15prozentigen Natronlauge verwendet werden. Der pH-Wert des Reaktionsgemisches beträgt 11,0. Die Gelierung des bräunlich gefärbten Reaktionsgemisches beginnt nach 15 Minuten, und nach weiteren 30 Minuten ist die Methanolyse des Polyvinylesters beendet. Die Trocknung wird bei einer Temperatur von 80°C unter Stick stoffatmosphäre durchgeführt.

Aus dem erhaltenen braunen Polyvinylalkohol-Komplex wird eine 10prozentige wäßrige Lösung hergestellt, und aus dieser wird ein 50/um dicker Film gegossen. Dieser Film ist nach Verstreckung als Polarisationsfilter geeignet.

BEISPIEL 6

Beispiel 1 wird wiederholt, wobei statt der Lösung von Triethanolamintitanat nun 40 g einer einprozentigen methanolischen Lösung von Ammoniumbichromat und statt 1,5 g 3 g der 15prozentigen Natronlauge verwendet werden. Der pH-Wert des Reaktionsgemisches beträgt 9,5. Die Gelierung des orange gefärbten Reaktionsgemisches beginnt nach 16 Minuten, und nach weiteren 15 Minuten ist die Methanolyse des Polyvinylesters beendet. Alle Operationen einschließlich des Trocknens bei einer Temperatur von 40°C und einem Druck von 20 mbar werden unter Lichtausschluß durchgeführt.

Aus dem erhaltenen Polyvinylalkohol-Komplex wird eine 10prozentige wäßrige Lösung hergestellt, und aus dieser wird ein 30/um dicker Film gegossen. Der Film wird durch Belichtung mit UV-Licht wasserunlöslich; er eignet sich zur Beschichtung von Siebdruckschablonen und Offsetdruckplatten.

Patentansprüche:

1. Verfahren zur Herstellung einer Komplexverbindung aus Polyvinylalkohol und einer mit Polyvinylalkohol Komplexe bildenden Verbindung durch Alkoholyse eines Polyvinylesters in Gegenwart der Komplexe bildenden Verbindung und eines basischen Katalysators, dadurch gekennzeichnet, daß bei einer Temperatur von 10 bis 50°C zunächst eine alkoholische Lösung eines Polyvinylesters mit einem Polymerisationsgrad von 400 bis 10 000 mit einer alkoholischen Lösung der Komplexe bildenden Verbindung zu einem klaren Lösungsgemisch vereinigt und in diesem Lösungsgemisch dann eine Lösung des Katalysators in einem alkoholischen Medium homogen verteilt wird.

2. Verfahren nach Anspruch 1, dadurch gekennzeichnet, daß als Lösemittel für den Polyvinylester, die Komplexe bildende Verbindung und den Katalysator jeweils derselbe niedere Alkohol verwendet wird.

3. Verfahren nach Anspruch 2, dadurch gekennzeichnet, daß als niederer Alkohol Methanol verwendet wird.

4. Verfahren nach Anspruch 1, dadurch gekennzeichnet, daß als Komplexe bildende Verbindung eine Verbindung eines Elements der I., IV., V. oder VI. Nebengruppe oder der III. Hauptgruppe des Periodensystems der Elemente verwendet wird.

5. Verfahren nach Anspruch 4, dadurch gekennzeichnet, daß als Komplexe bildende Verbindung eine anorganische Verbindung des Bors verwendet wird.

6. Polyvinylalkohol-Komplexverbindung, hergestellt nach einem der Verfahren gemäß Anspruch 1 bis 5.

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| P,X | EP-A-0 032 572 (HOECHST) *Insgesamt* | 1-6 | C 08 F 8/12 C 08 F 8/42 |
| X | CHEMICAL ABSTRACTS, Band 68, Nr. 20, 13. Mai 1968, Seite 8492, Spalte 2, Nr. 87880n, Columbus Ohio (USA); & JP - A - 67 26 700 (SHIN-ETSU CHEMICAL INDUSTRY CO. LTD.) (18.12.1967) *Zusammenfassung* | 1,2,3, 4,5,6 | |
| A | GB-A- 829 634 (SHELL) *Seite 1, Zeile 8 - Seite 2, Zeile 114* | 1 | |
| A | FR-A-2 262 050 (KURARAY) *Seite 1, Zeile 14 - Seite 5, Zeile 4* | 1 | |
| A | FR-A-2 302 319 (UNITED KINGDOM OF GREAT BRITAIN AND NORTHERN IRELAND) *Seite 1, Zeile 14 - Seite 5, Zeile 6* | 1 | RECHERCHIERTE SACHGEBIETE (Int. Cl. ³) C 08 F |
| A | US-A-4 230 825 (MICHAEL F.HARDY) *Spalte 1, Zeile 49 - Spalte 2, Zeile 56* | 1 | |

Der vorliegende Recherchenbericht wurde für alle Patentansprüche erstellt.

| Recherchenort | Abschlußdatum der Recherche | Prüfer |
|---|---|---|
| DEN HAAG | 19-10-1982 | SCHRIJVERS H.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82